# EUROPEAN PATENT SPECIFICATION

(11) **EP 3 537 789 B1**
(45) Date of publication and mention of the grant of the patent: **30.12.2020**
(21) Application number: 17867354.7
(22) Date of filing: 02.11.2017
(51) Int. Cl.: H04W 68/00, H04W 76/27

(54) **PAGING METHOD, BASE STATION AND TERMINAL**
FUNKRUFVERFAHREN, BASISSTATION UND ENDGERÄT
PROCÉDÉ DE RADIOMESSAGERIE, STATION DE BASE ET TERMINAL

(30) Priority: 03.11.2016 CN 201610955201
(43) Date of publication of application: 11.09.2019
(73) Proprietor: China Academy of Telecommunications Technology, Haidian District Beijing 100191 (CN)
(72) Inventor: LIANG, Jing, Beijing 100191 (CN); QUAN, Haiyang, Beijing 100191 (CN)
(74) Representative: dompatent von Kreisler Selting Werner - Partnerschaft von Patent- und Rechtsanwälten mbB
(86) International application number: PCT/CN2017/109060
(87) International publication number: WO 2018/082598

(56) References cited:
- CN-A- 104 115 536
- US-A1- 2014 146 759
- ERICSSON: "Paging in Light Connection", 3GPP DRAFT; R2-166950 - PAGING FOR LIGHT CONNECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Kaohsiung, Taiwan; 20161010 - 20161014 1 October 2016 (2016-10-01), XP051162317, Retrieved from the Internet: URL:http://www.3gpp.org/ftp/tsg_ran/WG2_RL 2/TSGR2_95bis/Docs/ [retrieved on 2016-10-01]
- ERICSSON: "DRX in idle and "inactive state"", 3GPP DRAFT; R2-166960 - DRX IN IDLE AND INACTIVE STATE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Kaohsiung, Taiwan; 20161010 - 20161014 30 September 2016 (2016-09-30), XP051161934, Retrieved from the Internet: URL:http://www.3gpp.org/ftp/tsg_ran/WG2_RL 2/TSGR2_95bis/Docs/ [retrieved on 2016-09-30]
- NTT DOCOMO ET AL: "Discussion on RRC state mismatch issue", 3GPP DRAFT; R2-167140_DISCUSSION ON RRC STATE MISMATCH ISSUE#95BIS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG2, no. Kaohsiung, Taiwan; 20161010 - 20161014 1 October 2016 (2016-10-01), XP051162469, Retrieved from the Internet: URL:http://www.3gpp.org/ftp/tsg_ran/WG2_RL 2/TSGR2_95bis/Docs/ [retrieved on 2016-10-01]
- NTT DOCOMO ET AL: "UE state transition diagram for NR", 3GPP DRAFT; R2-167136, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Kaohsiung, Taiwan; 20161010 - 20161014 9 October 2016 (2016-10-09), XP051151530, Retrieved from the Internet: URL:http://www.3gpp.org/ftp/Meetings_3GPP_ SYNC/RAN2/Docs/ [retrieved on 2016-10-09]
- ERICSSON: "Report from E-mail Discussion on RRC Procedures", TSG-RAN Working Group 2 (Radio layer 2 and Radio layer 3), 20 September 1999 (1999-09-20), page 6, XP050113547,
- NTT DOCOMO, INC: "UE State Transition Diagram for NR", 3GPP TSG-RAN WG2#95bis, R2-167136, 10 October 2016 (2016-10-10), XP051151530, Kaohsiung, Taiwan

## Description

### TECHNICAL FIELD

The present disclosure relates to the field of wireless communication technology, in particular to a paging method, a base station and a User Equipment (UE).

### BACKGROUND

A plurality of UE states has been defined in a Long Term Evolution (LTE) system, e.g., a Radio Resource Control (RRC) idle state (RRC_IDLE), an RRC connected state (RRC_CONNECTED) and a light connection state. Along with the development of the wireless communication system, more types of UEs and more types of services have emerged, and the reduction of power consumption of the UE and saving of network resources may coexist with the satisfaction of the requirements on various services types. Behaviors capable of being executed by the UE in various states will be described hereinafter.
1. The behaviors capable of being executed by the UE in the RRC_IDLE state may include: the selection of Public Land Mobile Network (PLMN); the configuration of Discontinuous Reception (DRX) via a Non-Access Stratum (NAS); the broadcasting of system information; paging; the mobility in a cell reselection mode; the allocation of a unique identifier for the UE in a certain Tracking Area (TA); UE context being not stored in an evolved Node B (eNB); the transmission and reception of sidelink communication data (Device-to-Device (D2D) communication); and the notification and monitoring of sidelink discovery (D2D discovery).
2. The behaviors capable of being executed by the UE in the RRC_CONNECTED state may include: that there is an Evolved Universal Mobile Telecommunications System (UMTS) Terrestrial Radio Access Network (E-UTRAN)-RRC connection for the UE; that there is the UE context at an E-UTRAN side; that the E-UTRAN is aware of a cell to which the UE belongs and allocates a Cell-Radio Network Temporary Identifier (C-RNTI) for the UE; that the data is capable of being transmitted and received between a network and the UE in accordance with the C-RNTI; the mobility controlled by the network; the measurement of a neighboring cell; the transmission and reception of sidelink communication data (D2D communication); the notification and monitoring of sidelink discovery (D2D discovery); Packet Data Convergence Protocol (PDCP)/Radio Link Control (RLC)/Media Access Control (MAC) layer; the transmission and reception of data between the UE and the network; that the UE monitors a control signaling channel related to a shared data channel so as to check whether data is transmitted on the shared data channel allocated for the UE; that the UE reports channel quality information and feedback information to the eNB; and that a DRX period is controlled by the eNB and configured by the eNB in accordance with an activity level of power-saving of the UE and the resource utilization.

State transition supported in the LTE system includes transition from the RRC_IDLE state to the RRC CONNECTED state (at this time, it is necessary for the UE to initiate an access or reestablishment process), and transition from the RRC CONNECTED state to the RRC_IDLE state through a release process.

In order to ensure the reduction of the power consumption of the UE and the rapid data transmission for the UE, currently a new UE state, i.e., an inactive state, has been introduced. In this state, the connection between the UE and a core network is maintained. However, the UE is incapable of performing conventional operation in an air-interface connected state (e.g., switching, updating of uplink timing, and radio link monitoring), and no UE Identifier (ID) for the air-interface transmission (e.g., the C-RNTI) is allocated for the UE, so it is impossible for the UE to perform any air-interface scheduling operation. In addition, in the inactive state, the UE needs to monitor a paging message, so as to receive a call from a network side. There are the following characteristics for the inactive state. The core network considers that the UE is in a connected state. The mobility management is performed by the UE in a Radio Access Network (RAN) TA pre-configured at a network side through a cell reselection process rather than a handover process. A unique user ID has been allocated for the UE in the RAN TA pre-configured at the network side.

In the inactive state, a valid RAN ID in a certain area is allocated by the network side for the UE, so as to identify the UE in the inactive state. When the network side searches for the UE or the UE initiates an uplink access process, the UE may enter the connected state through the RAN ID. This ID may also be called as an inactive UE ID or a resume UE ID. Different from a globally unique International Mobile Subscriber Identity (IMSI) or the C-RNTI, the inactive UE ID may have a length between lengths of the IMSI and the C-RNTI (e.g., the inactive UE ID has a length of 40 bits, and the C-RNTI has a length of 16 bits). In addition, the inactive UE ID may merely be valid in a certain area including a plurality of cells or base stations (eNBs). When the UE has moved beyond this area, it is necessary for the UE to update the inactive UE ID.

When the UE is in the inactive state, there is no connection between the UE and the base station, but the UE is capable of receiving a paging message and initiating a service, so it is able to save electric quantity of the UE. In the inactive state, the UE monitors the paging message in accordance with a paging period for the inactive state, and when the UE is in the RRC_IDLE state, the UE monitors the paging message in accordance with a paging period for the RRC_IDLE state. The paging period for the UE in the inactive state is configured by the base station, and the paging period for the UE the RRC_IDLE state is configured by the core network. A relationship between the two paging periods is not defined.

When the network side (including the base station and the core network) has released the context of the UE in the inactive state due to its own reasons without notifying the UE, or a notification message to be transmitted to the UE has been lost at an air interface, the state of the UE may be understood by the UE and the network side differently. To be specific, the network side may think that the UE is in the idle state (i.e., an Access Stratum (AS) and the Non-Access Stratum (NAS) are both in the idle state), an AS of the UE may think that the AS of the UE is in the inactive state, and an NAS of the UE may think that the NAS of the UE is in the CONNECTED state. Because the paging period for the inactive state is different from the paging period for the idle state, when the network side initiates a paging process for the core network, it is impossible for the UE to receive the paging message.

Hence, when the UE is in the inactive state, the paging process for the UE may be adversely affected because the state of the UE is understood by the network side and the UE differently.

ERICSSON: "Paging in Light Connection", 3GPP DRAFT; R2-166950 - PAGINGFOR LIGHT CONNECTION, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Kaohsiung, Taiwan; 20161010- 20161014 1 October 2016 (2016-10-01) discusses paging for Light Connected UE.

ERICSSON: "DRX in idle and "inactive state"", 3GPP DRAFT; R2-166960 - DRX IN IDLE AND INACTIVE STATE, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Kaohsiung, Taiwan; 20161010- 20161014 30 September 2016 (2016-09-30) relates to the DRX (Discontinuous Reception) concept for UEs in idle state as well as for UEs in the RAN (Radio Access Network) controlled "inactive state".

US 2014/146759 A1 discloses a method for addressing RRC (Radio Resource Control) status mismatch in a wireless communication system.

NTT DOCOMO ET AL: "Discussion on RRC state mismatch issue", 3GPP DRAFT; R2-167140 - DISCUSSION ON RRC STATE MISMATCH ISSUE#95BIS, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Kaohsiung, Taiwan; 20161010- 20161014 1 October 2016 (2016-10-01) discusses potential solutions to resolve the RRC state mismatch issue.

NTT DOCOMO ET AL: "UE state transition diagram for NR", 3GPP DRAFT; R2-167136, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, vol. RAN WG2, no. Kaohsiung, Taiwan; 20161010- 20161014 9 October 2016 (2016-1 0-09) investigates a UE state transition diagram between NR (New Radio) and LTE.

### SUMMARY

The present disclosure has solved the afore-described problem as defined in the attached claims. An object of the present disclosure is to provide a paging method, a base station and a UE, so as to prevent the paging process from being adversely affected due to the state of the UE in the inactive state is understood by the network and the UE differently.

In one aspect, the present disclosure provides in some embodiments a paging method, including: receiving, by a UE in an inactive state, a paging message for determining a paging type, the paging message being transmitted from a base station, the paging type including an access network paging initiated by an access network or a core network paging initiated by a core network; determining, by the UE, the paging type corresponding to the paging message; and when the paging type corresponding to the paging message is the core network paging, updating, by the UE, each of states of a NAS and a RRC layer for the UE into an idle state, and responding to, by the UE, the paging message.

In another aspect, the present disclosure provides in some embodiments a paging method, including: determining, by a base station, a paging type of a paging for a UE when it is necessary for the base station to initiate the paging for the UE, the paging type including an access network paging initiated by an access network or a core network paging initiated by a core network; and transmitting, by the base station, a paging message for determining the paging type to the UE.

In yet another aspect, the present disclosure provides in some embodiments a UE, including: a reception unit configured to receive a paging message for determining a paging type when the UE is in an inactive state, wherein the paging message is transmitted from a base station, the paging type includes an access network paging initiated by an access network or a core network paging initiated by a core network; a determination unit configured to determine the paging type corresponding to the paging message; and a first response unit configured to, when the paging type corresponding to the paging message is the core network paging, update each of states of an NAS and an RRC layer for the UE into an idle state, and respond to the paging message.

In still yet another aspect, the present disclosure provides in some embodiments a base station, including: a determination unit configured to determine a paging type of a paging for a UE when it is necessary for the base station to initiate the paging for the UE, wherein the paging type includes an access network paging initiated by an access network or a core network paging initiated by a core network; and a transmission unit configured to transmit a paging message for determining the paging type to the UE.

In still yet another aspect, the present disclosure provides in some embodiments a UE, including a processor, a transceiver and a memory. The processor is configured to read a program stored in the memory, so as to: receive a paging message for determining a paging type when the UE is in an inactive state, wherein the paging message is transmitted from a base station, the paging type includes an access network paging initiated by an access network or a core network paging initiated by a core network; determine the paging type corresponding to the paging message; and when the paging type corresponding to the paging message is the core network paging, update each of states of an NAS and an RRC layer for the UE into an idle state, and respond to the paging message. The transceiver is configured to receive and transmit data. The memory is configured to store therein data for the operation of the processor.

In still yet another aspect, the present disclosure provides in some embodiments a base station, including a processor, a transceiver and a memory. The processor is configured to read a program stored in the memory, so as to: determine a paging type of a paging for a UE when it is necessary for the base station to initiate the paging for the UE, wherein the paging type includes an access network paging initiated by an access network or a core network paging initiated by a core network; and transmit a paging message for determining the paging type to the UE. The transceiver is configured to receive and transmit data. The memory is configured to store therein data for the operation of the processor.

According to the paging method, the UE and the base station in the embodiments of the present disclosure, during the paging process for the UE in the inactive state, as compared with the related art, it is able to prevent the occurrence of a paging failure for the UE when the state of the UE is understood by the network and the UE differently, thereby to enable the UE to accurately receive the paging message and improve a success rate of the paging process.

### BRIEF DESCRIPTION OF THE DRAWINGS

Fig.1 is a schematic view showing an application scenario for a wireless system area management method according to some embodiments of the present disclosure;
Fig.2 is a schematic view showing another application scenario for the wireless system area management method according to some embodiments of the present disclosure;
Fig.3 is a flow chart of a paging method according to some embodiments of the present disclosure;
Fig.4 is a flow chart of another paging method according to some embodiments of the present disclosure;
Fig. 5 is a schematic view showing a UE according to some embodiments of the present disclosure;
Fig. 6 is another schematic view showing the UE according to some embodiments of the present disclosure;
Fig.7 is a schematic view showing a base station according to some embodiments of the present disclosure; and
Fig.8 is another schematic view showing the base station according to some embodiments of the present disclosure.

### DETAILED DESCRIPTION OF THE EMBODIMENTS

The present invention is defined by the attached independent claims. Advantageous embodiments are described in the attached dependent claims. Embodiments and/or examples mentioned in the description that do not fall under the scope of the claims are useful for understanding the present invention. In order to make the objects, the technical solutions and the advantages of the present disclosure more apparent, the present disclosure will be described hereinafter in a clear and complete manner in conjunction with the drawings and embodiments. In the following description, specific details of configurations and assemblies are merely provided to facilitate the understanding of the present disclosure.
In addition, for clarification and concision, any known function and structure will not be described hereinafter.

It should be further appreciated that, such phrases as "one embodiment" and "an embodiment" intend to indicate that the related features, structures or characteristics are contained in at least one embodiment of the present disclosure, rather than necessarily referring to a same embodiment. In addition, the features, structures or characteristics may be combined in any embodiment or embodiments in an appropriate manner.

It should be appreciated that, the following serial numbers do not refer to the order of the steps. Actually, the order shall be determined in accordance with functions and internal logic of the steps, but shall not be construed as limiting the implementation in any form.

In addition, the terms "system" and "network" may be replaced with each other.

It should be appreciated that, the expression "and/or" is merely used to describe the relationship between objects, and it includes three relationships. For example, "A and/or B" may represent that, there is only A, there are both A and B, and there is only B. Further, the symbol "/" usually refers to "or".

It should be further appreciated that, the expression "B corresponding to A" means that B is related to A and may be determined in accordance with A. It should be further appreciated that, in the case that B is determined in accordance with A, it means that B may be determined in accordance with A and/or any other information.

In some embodiments of the present disclosure, A UE may be a mobile phone (or cell phone) or any other device capable of transmitting or receiving a radio signal, including a UE, a Personal Digital Assistant (PDA), a wireless modem, a wireless communication device, a handheld device, a laptop computer, a cordless telephone, a Wireless Local Loop (WLL) station, Customer Premise Equipment (CPE) or a mobile smart hotspot capable of converting a mobile signal into a WiFi signal, an intelligent household electrical appliance, or any other device capable of spontaneously communicating with a mobile communication network without manual operation.

In some embodiments of the present disclosure, the form of the base station will not be particularly defined, and it may be a macro base station, a pico base station, a Node B (i.e., a 3^{rd}-Generation (3G) base station), an evolved NodeB (eNB), a femto eNB (or Home eNode B or Home eNB (HeNB)), a relay, an access point, a Remote Radio Unit (RRU), a Remote Radio Head (RRH), or the like. In addition, along with the development of the 5^{th}-Generation (5G) technology, the base station may also be any other functional node, e.g., a Central Unit (CU) or a Distributed Unit (DU). The scheme in the embodiments of the present disclosure may be applied to the above scenarios. Radio Access Network (RAN) architecture in an LTE networking scenario in the 5G technology and a possible networking scenario will be described briefly hereinafter.

The LTE networking scenario in the 5G technology: a base station + a UE.

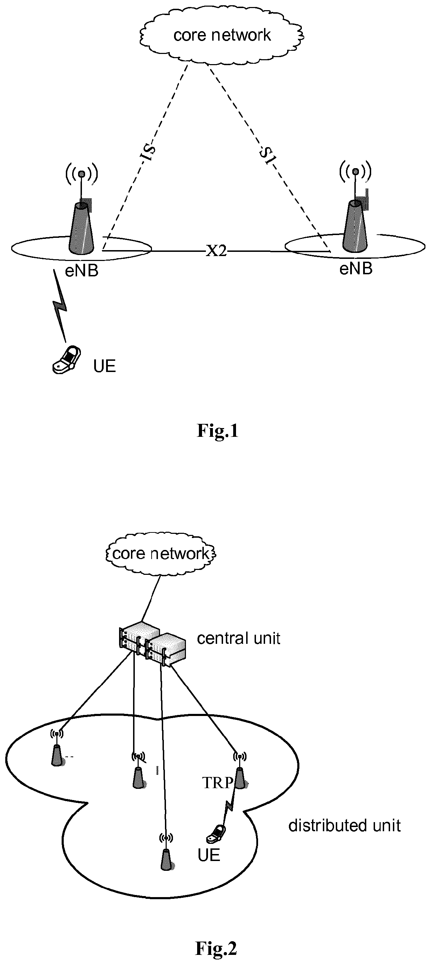

Fig.1 shows a typical LTE architecture. There is a plurality of cells in a coverage of each base station (eNB), and the UE in a connected state may receive data from and transmit data to the cell via an air interface. The UE in the connected state may be allocated with a unique UE ID in the cell, i.e., a C-RNTI. The base stations may communicate with each other via an X2 interface, and each base station may communicate with a core network via an S1 interface.

5G networking scenario: a network side node may include CUs and DUs, and a UE side node may include UEs.

Fig.2 shows a possible architecture of a coming 5G mobile communication system. The network side node may include CUs and DUs, and each CU may control a plurality of DUs deployed in a certain area. These DUs may also be called as Transmission Reception Points (TRPs). Each TRP may communicate with the UE via an air interface. Each UE may be served by one or more TRPs simultaneously, so as to perform the data transmission. Here, it is necessary to allocate by the network side a unique air-interface ID for each UE (e.g., a C-RNTI or a TRP-RNTI), so as to schedule and transmit the data.

The scheme in the embodiments of the present disclosure may be applied to the above two types of RAN architecture, or another scenario. For ease of description, in the embodiments of the present disclosure, nodes for transmitting and receiving radio signaling and data at the network side, including eNBs in Fig.1 and CUs/DUs n Fig.2 (TRPs serving as the nodes), may be collectively called as base station. In addition, the UE unique ID for the transmission for the UE in a connected state may be called as unique air-interface transmission ID for the UE, i.e., a C-RNTI in a conventional LTE system, and a unique ID of the UE in an inactive state in a certain area may be called as inactive UE ID.

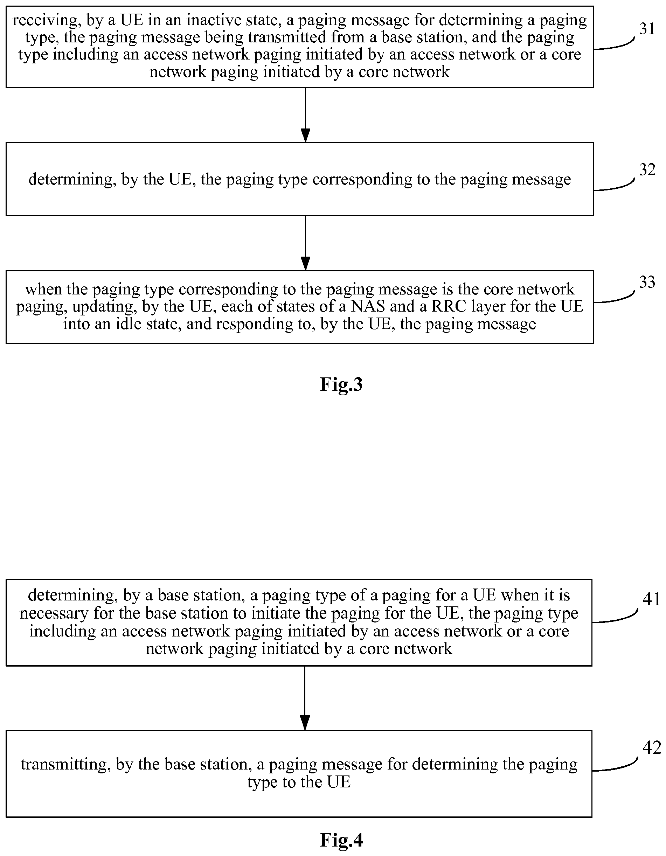

As shown in Fig.3, the present disclosure provides in some embodiments a paging method for use at a UE side, which includes the following steps.

Step 31: receiving, by a UE in an inactive state, a paging message for determining a paging type, the paging message being transmitted from a base station, and the paging type including an access network paging initiated by an access network or a core network paging initiated by a core network.

Usually, the core network paging is a paging initiated by the core network with respect to the UE in an active state (e.g., an RRC_CONNECTED state), and the access network paging is a paging initiated by the base station with respect to the UE in the inactive state. It should be appreciated that, the core network paging also needs to be forwarded by the base station to the UE. In the embodiments of the present disclosure, the paging message from the base station may be adopted to determine the paging type corresponding to the paging message. To be specific, the base station may indicate the paging type explicitly or implicitly through the paging message.

Step 32: determining, by the UE, the paging type corresponding to the paging message.

Step 33: when the paging type corresponding to the paging message is the core network paging, updating, by the UE, each of states of a NAS and a RRC layer for the UE into an idle state, and responding to, by the UE, the paging message.

In some embodiments of the present disclosure, through the above steps, when the UE in the inactive state receives the core network paging, the UE in the inactive state may update its own NAS and RRC layer into the idle state, so as to respond to the paging message in accordance with a behavior of the UE defined in the idle state, thereby to prevent the paging processing from being adversely affected when the state of the UE is understood by the network and the UE differently.

In some embodiments of the present disclosure, when the paging type corresponding to the paging message is the access network paging in Step 32, the UE may directly respond to the paging message, and initiate a connection recovery, establishment or reestablishment process. For example, the UE may directly respond to the paging message at the RRC layer, and initiate the connection recovery, establishment or reestablishment process. A subsequent paging responding procedure may refer to that mentioned in the related art, and thus will not be particularly defined herein.

In some embodiments of the present disclosure, the base station may indicate the paging type in an explicit or implicit manner. Indication modes will be described illustratively hereinafter in some embodiments of the present disclosure. It should be appreciated that any other mode capable of indicating the paging type for the UE may also be adopted.

### 1) Explicit indication

The base station may carry indication information of the paging type in the paging message. At this time, in Step 32, the UE may determine the paging type corresponding to the paging message in accordance with the indication information.

For example, the paging type may be indicated through a specific 1-bit value of an indication bit. When the value is 0, it means that the paging type is the access network paging, and when the value is 1, it means that the paging type is the core network paging. The UE may read the value of the indication bit, so as to determine the paging type.

### 2) Implicit indication

2.1) The base station may carry a predetermined parameter expressed in predetermined expression modes in the paging message, and different expression modes of the predetermined parameter may correspond to different paging types. At this time, in Step 32, the UE may determine the paging type corresponding to the expression mode of the predetermined parameter in the paging message, thereby to acquire the paging type corresponding to the paging message.
   For example, the access network paging and the core network paging may be provided with different UE paging IDs. To be specific, the access network paging may be provided with an inactive UE ID or a resume ID, while the core network paging may be provided with an S-Temporary Mobile Station Identity (S-TMSI) or IMSI. The UE may determine the paging type in accordance with an expression mode of the UE paging ID in the paging message.
2.2) The base station may carry or not carry a first predetermined parameter in the paging message, and whether the first predetermined parameter is carried in the paging message may be determined in accordance with the paging type. At this time, in Step 32, the UE may determine the paging type corresponding to the paging message in accordance with whether the first predetermined parameter is carried in the paging message.

For example, the core network paging may carry a core network domain parameter, e.g., CN-Domain, so as to identify whether the paging is a Packet Switching (PS) domain paging or a Circuit Switching (CS) domain paging. The access network paging may not carry the parameter. Upon the receipt of the paging message, the UE may determine whether the paging type is the core network paging or the access network paging in accordance with whether the core network domain parameter is carried in the paging message.

In Step 33, when the paging type corresponding to the paging message is the core network paging, the UE may update each of the states of the NAS and the RRC layer for the UE into the idle state, respond to the paging message in the idle state, and execute a corresponding paging responding behavior. For example, the UE may update the states of the NAS and the RRC layer in the following modes.

Mode 1: the RRC layer for the UE may update the state of the RRC layer into the idle state, and notify the NAS to release a connection for the UE. Then, the NAS for the UE may update its state into the idle state too in accordance with a notification from the RRC layer. The RRC layer for the UE may deliver paging content in the paging message to the NAS, and the NAS may receive the paging content and respond thereto.

In mode 1, the RRC layer, as a dominant one, may notify the NAS to update its state, and deliver the paging content in the paging message to the NAS, so as to perform a responding procedure of the paging message in the idle state.

Mode 2: the RRC layer for the UE may deliver the paging content in the paging message to the NAS, and update the state of the RRC layer into the idle state. Upon the receipt of the paging content, the NAS for the UE may update its state into the idle state, and respond to the paging content.

In mode 2, upon the receipt of the paging content delivered from the RRC layer, the NAS may update its own state into the idle state, and then perform the responding procedure of the paging message in the idle state.

The updating of the state may be achieved through updating a corresponding state of a state machine in the layer. When the state machine is in different states, the UE may perform the behavior corresponding to each state, e.g., respond to the paging message. The behaviors may refer to relevant definitions in the known standard, and thus will not be particularly defined herein.

It should be appreciated that, the above updating modes are for illustrative purposes only, and the UE may update the states in any other modes, which will not be particularly defined herein.

As shown in Fig.4, the present disclosure further provides in some embodiments a paging method for use at a base station side, which includes the following steps.

Step 41: determining, by a base station, a paging type of a paging for a UE when it is necessary for the base station to initiate the paging for the UE, the paging type including an access network paging initiated by an access network or a core network paging initiated by a core network.

Here, the base station may determine whether the paging type is the core network paging or the access network paging in accordance with an initiator which has initiated the paging.

Step 42: transmitting, by the base station, a paging message for determining the paging type to the UE.

Here, the paging type may be indicated to the UE through the paging passage with reference to the above-mentioned explicit or implicit indication mode.

For example, when the explicit indication mode is adopted, the indication information of the paging type may be carried in the paging message. At this time, in Step 42, the base station may transmit the paging message carrying the indication information of the paging type to the UE, wherein different expression modes of the predetermined parameter may correspond to different paging types.

For another example, when the implicit indication mode is adopted, the predetermined parameter expressed in the predetermined expression mode may be carried in the paging message, and different expression modes of the predetermined parameter may correspond to different paging types. At this time, in Step 42, the base station may determine the expression mode of the predetermined parameter in accordance with the paging type, and then transmit the paging message carrying the predetermined parameter expressed in the predetermined expression mode to the UE.

For yet another example, when the implicit indication mode is adopted, the first predetermined parameter may be carried or not carried in the paging message, and whether the first predetermined parameter is carried in the paging message may be determined in accordance with the paging type. At this time, in Step 42, the base station may determine whether the first predetermined parameter is carried in the paging message in accordance with the paging type, and then transmit the paging message carrying or not carrying the first predetermined parameter to the UE.

It can be seen from above that, according to the embodiments of the present disclosure, the base station may indicate the paging type in the paging message. Upon the receipt of the paging message, the UE in the inactive state may update the states of the NAS and the RRC into the idle state, and then respond to the paging message. As a result, it is able for both a network side and a UE side to complete a paging behavior of the UE based on a same UE state, thereby to prevent the paging process from being adversely affected when the state of the UE is understood by the network and the UE differently.

The base station and the UE for the implementation of the above methods will be described hereinafter.

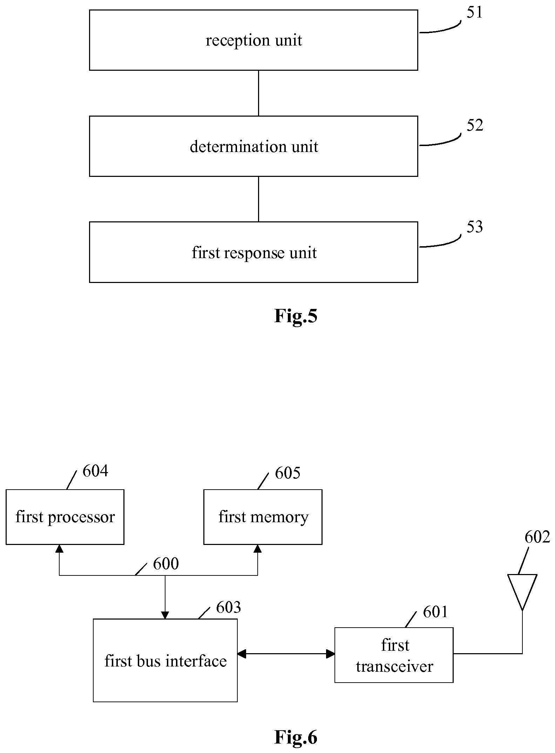

As shown in Fig.5, the present disclosure further provides in some embodiments a UE which includes: a reception unit 51 configured to receive a paging message for determining a paging type when the UE is in an inactive state, wherein the paging message is transmitted from a base station, the paging type includes an access network paging initiated by an access network or a core network paging initiated by a core network; a determination unit 52 configured to determine the paging type corresponding to the paging message; and a first response unit 53 configured to, when the paging type corresponding to the paging message is the core network paging, update each of states of an NAS and an RRC layer for the UE into an idle state, and respond to the paging message.

In a possible embodiment of the present disclosure, the first response unit 53 may include: a first processing unit located at the RRC layer and configured to update the state of the RRC layer for the UE into the idle state, notify the NAS for the UE to release a connection for the UE, and deliver paging content in the paging message to the NAS; and a second processing unit located at the NAS and configured to update the state of the NAS into the idle state in accordance with a notification from the first response unit, receive the paging content delivered from the first processing unit, and respond to the paging content.

In a possible embodiment of the present disclosure, the first response unit 53 may include: a third processing unit located at the RRC layer and configured to deliver the paging content in the paging message to the NAS, and update the state of the RRC layer into the idle state; and a fourth processing unit located at the NAS and configured to, upon the receipt of the paging content delivered from the third processing unit, update the state of the NAS into the idle state, and respond to the paging content.

Here, the UE may further include a second response unit configured to, when the paging type is the access network paging, directly respond to the paging message, and initiate a connection recovery, establishment or reestablishment process.

To be specific, the second response unit may include a fifth processing unit located at the RRC layer and configured to respond to the paging message at the RRC layer, and initiate the connection recovery, establishment or reestablishment process.

In a possible embodiment of the present disclosure, indication information of the paging type may be carried in the paging message. At this time, the determination unit 52 is further configured to determine the paging type corresponding to the paging message in accordance with the indication information.

In another possible embodiment of the present disclosure, a predetermined parameter expressed in a predetermined expression mode may be carried in the paging message, and different expression modes of the predetermined parameter may correspond to different paging types. At this time, the determination unit 52 is further configured to determine the paging type corresponding to the expression mode of the predetermined parameter in the paging message, thereby to acquire the paging type corresponding to the paging message.

In yet another possible embodiment of the present disclosure, a first predetermined parameter may be carried or not carried in the paging message, and whether the first predetermined parameter is carried in the paging message may be determined in accordance with the paging type. At this time, the determination unit 52 is further configured to determine the paging type corresponding to the paging message in accordance with whether the first predetermined parameter is carried in the paging message.

As shown in Fig.6, the present disclosure further provides in some embodiments a UE which includes a first transceiver 601, a first processor 604 and a first memory 605. The first transceiver 601 is configured to receive and transmit data under the control of the first processor 604. To be specific, the first transceiver 601 may receive a paging message for determining a paging type from the base station, and the paging type may include an access network paging initiated by an access network or a core network paging initiated by a core network. The first processor 604 is configured to read a program stored in the first memory 605, so as to: determine the paging type corresponding to the paging message in accordance with the paging message received through the first transceiver 601; and when the paging type corresponding to the paging message is the core network paging, update states of an NAS and an RRC layer for the UE each into an idle state, and respond to the paging message.

In Fig.6, bus architecture (represented by a first bus 600) may include a number of buses and bridges connected to each other, the first bus 600 connects various circuits including one or more processors represented by the processor 604 and one or more memories represented by the first memory 605. In addition, as is known in the art, the first bus 600 may also be used to connect various other circuits, such as a circuit for a peripheral device, a circuit for a voltage stabilizer and a power management circuit, which are not particularly defined herein. A first bus interface 603 may be provided between the first bus 600 and the first transceiver 601, and the first transceiver 601 may consist of one element, or more than one element, e.g., transmitters and receivers, so as to provide a unit for communication with various other devices over a transmission medium. Data processed by the first processor 604 may be transmitted on a wireless medium via the first transceiver 601 and a first antenna 602. Further, the first antenna 602 may further receive data and transmit the data to the first processor 604 via the first transceiver 601.

The first processor 604 may take charge of managing the first bus 600 as well as general processings, and may further provide various functions such as timing, peripheral interfacing, voltage adjustment, power source management and other control functions. The first memory 605 may store therein data for the operation of the first processor 604. To be specific, the first processor 604 may be a Central Processing Unit (CPU), an Application Specific Integrated Circuit (ASIC), a Field-Programmable Gate Array (FPGA) or a Complex Programmable Logic Device (CPLD).

In a possible embodiment of the present disclosure, the first processor 604 is further configured to, upon determining that the paging type corresponding to the paging message is the core network paging, control the RRC layer for the UE to update the state of the RRC layer into the idle state, notify the NAS to release a connection for the UE, control the NAS for the UE to update the state of the NAS into the idle state, control the RRC layer for the UE to deliver paging content in the paging message to the NAS, and control the NAS to receive the paging content and respond to the paging content.

In a possible embodiment of the present disclosure, the first processor 604 is further configured to, upon determining that the paging type corresponding to the paging message is the core network paging, control the RRC layer for the UE to deliver the paging content in the paging message to the NAS, control the RRC layer to update the state of the RRC layer into the idle state, and control the NAS for the UE to update the state of the NAS into the idle state and respond to the paging content after the NAS has received the paging content,.

The first processor 604 is further configured to, upon determining the paging type corresponding to the paging message is the access network paging, directly respond to the paging message, and initiate a connection recovery, establishment or reestablishment process. To be specific, the first processor 604 may directly respond to the paging message at the RRC layer, and initiate the connection recovery, establishment or reestablishment process.

In a possible embodiment of the present disclosure, indication information of the paging type may be carried in the paging message. The first processor 604 is further configured to determine the paging type corresponding to the paging message in accordance with the indication information. In another possible embodiment of the present disclosure, a predetermined parameter expressed in a predetermined expression mode may be carried in the paging message, and different expression modes of the predetermined parameter may correspond to different paging types. The first processor 604 is further configured to determine the paging type corresponding to the expression mode of the predetermined parameter in the paging message, so as to acquire the paging type corresponding to the paging message. In yet another possible embodiment of the present disclosure, a first predetermined parameter may be carried or not carried in the paging message, and whether the first predetermined parameter is carried in the paging message may be determined in accordance with the paging type. The first processor 604 may determine the paging type corresponding to the paging message in accordance with whether the first predetermined parameter is carried in the paging message.

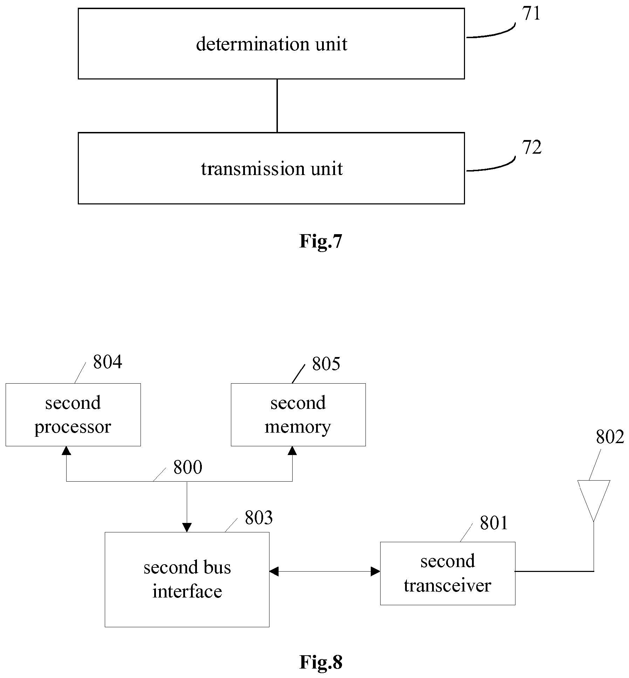

As shown in Fig.7, the present disclosure further provides in some embodiments a base station, which includes: a determination unit 71 configured to determine a paging type of a paging for a UE when it is necessary for the base station to initiate the paging for the UE, wherein the paging type includes an access network paging initiated by an access network or a core network paging initiated by a core network; and a transmission unit 72 configured to transmit a paging message for determining the paging type to the UE.

Herein, indication information of the paging type may be carried in the paging message; or a predetermined parameter expressed in a predetermined expression mode may be carried in the paging message, and different expression modes of the predetermined parameter may correspond to different paging types; or a first predetermined parameter may be carried or not carried in the paging message, and whether the first predetermined parameter is carried in the paging message may be determined in accordance with the paging type.

As shown in Fig.8, the present disclosure further provides in some embodiments a base station, which includes a second transceiver 801, a second processor 804 and a second memory 805. The second transceiver 801 is configured to receive and transmit data under the control of the second processor 804. To be specific, the second transceiver 801 may transmit a paging message for determining the paging type to a UE. The second processor 804 is configured to read a program stored in the second memory 805, so as to: determine the paging type when it is necessary to initiate a paging for the UE, the paging type including an access network paging initiated by an access network or a core network paging initiated by a core network; and control the second transceiver 801 to transmit the paging message for determining the paging type to the UE.

In Fig.8, bus architecture (represented by a second bus 800) may include a number of buses and bridges connected to each other, the second bus 800 connects various circuits including one or more processors represented by the processor 804 and one or more memories represented by the second memory 805. In addition, as is known in the art, the second bus 800 may also be used to connect various other circuits, such as a circuit for a peripheral device, a circuit for a voltage stabilizer and a power management circuit, which are not particularly defined herein. A second bus interface 803 may be provided between the second bus 800 and the second transceiver 801, and the second transceiver 801 may consist of one element, or more than one element, e.g., transmitters and receivers, so as to provide a unit for communication with various other devices over a transmission medium. Data processed by the second processor 804 may be transmitted on a wireless medium via the second transceiver 801 and a second antenna 802. Further, the second antenna 802 may further receive data and transmit the data to the second processor 804 via the second transceiver 801.

The second processor 804 may take charge of managing the second bus 800 as well as general processings, and may further provide various functions such as timing, peripheral interfacing, voltage adjustment, power source management and other control functions. The second memory 805 may store therein data for the operation of the second processor 804. To be specific, the second processor 804 may be a CPU, an ASIC, a FPGA or a CPLD.

According to the paging method, the base station and the UE in the embodiments of the present disclosure, during the paging process for the UE in the inactive state, it is able to prevent the occurrence of a paging failure for the UE when the state of the UE is understood by the network and the UE differently, thereby to enable the UE to accurately receive the paging message and improve a success rate of the paging process.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or another programmable data processing device to create a machine, so that instructions executable by the processor of the computer or the other programmable data processing device may create a device to achieve the functions assigned in one or more work flows in the flow chart and/or one or more blocks in the block diagram.

These computer program instructions may also be stored in a computer readable storage that may guide the computer or the other programmable data process device to function in a certain way, so that the instructions stored in the computer readable storage may create a product including an instruction device which achieves the functions assigned in one or more flows in the flow chart and/or one or more blocks in the block diagram.

These computer program instructions may also be loaded in the computer or the other programmable data process device, so that a series of operation steps are executed on the computer or the other programmable device to create processes achieved by the computer. Therefore, the instructions executed in the computer or the other programmable device provide the steps for achieving the function assigned in one or more flows in the flow chart and/or one or more blocks in the block diagram.

## Claims

1. A paging method, comprising:
receiving, by a User Equipment, UE, in an inactive state, a paging message for determining a paging type, the paging message being transmitted from a base station, and the paging type comprising an access network paging initiated by an access network or a core network paging initiated by a core network (31);
determining, by the UE, the paging type corresponding to the paging message (32); and
when the paging type corresponding to the paging message is the core network paging, updating, by the UE, each of states of a Non-Access Stratum, NAS, and a Radio Resource Control, RRC, layer for the UE into an idle state, and responding to, by the UE, the paging message (33),
**characterized in that** indication information of the paging type is carried in the paging message, wherein the indication information is of a value of one bit, the indication information indicates that the paging type is the access network paging when the value is 0, and the indication information indicates that the paging type is the core network paging when the value is 1; or
a predetermined parameter expressed in a predetermined expression mode is carried in the paging message, and different expression modes of the predetermined parameter correspond to different paging types; or
a first predetermined parameter is carried or not carried in the paging message, wherein it is determined whether the first predetermined parameter is carried in the paging message in accordance with the paging type.

2. The paging method according to claim 1, wherein the updating by the UE each of the states of the NAS and the RRC layer for the UE into the idle state and responding to by the UE the paging message comprises:
enabling the RRC layer for the UE to update a state of the RRC layer into the idle state and notify the NAS to release a connection for the UE, and enabling the NAS for the UE to update the state of the NAS into the idle state; and
enabling the RRC layer for the UE to deliver paging content in the paging message to the NAS, and enabling the NAS to receive the paging content and respond to the paging content.

3. The paging method according to claim 1, wherein the updating by the UE each of the states of the NAS and the RRC layer for the UE into the idle state and responding to by the UE the paging message comprises:
enabling the RRC layer for the UE to deliver paging content in the paging message to the NAS, and update the state of the RRC layer into the idle state; and
enabling the NAS for the UE, upon the receipt of the paging content, to update the state of the NAS into the idle state and respond to the paging content.

4. The paging method according to claim 1, further comprising:
when the paging type corresponding to the paging message is the access network paging, responding, by the UE, directly to the paging message, and initiating, by the UE, a connection recovery process, a connection establishment process or a connection reestablishment process.

5. The paging method according to claim 1, wherein
the indication information of the paging type is carried in the paging message; and
the determining by the UE the paging type corresponding to the paging message comprises: determining, by the UE, the paging type corresponding to the paging message in accordance with the indication information.

6. The paging method according to claim 1, wherein
the predetermined parameter expressed in the predetermined expression mode is carried in the paging message, and the different expression modes of the predetermined parameter correspond to the different paging types; and the determining by the UE the paging type corresponding to the paging message comprises: determining, by the UE, the paging type corresponding to the expression mode of the predetermined parameter in the paging message, to acquire the paging type corresponding to the paging message; or
the first predetermined parameter is carried or not carried in the paging message, and it is determined whether the first predetermined parameter is carried in the paging message in accordance with the paging type; and the determining by the UE the paging type corresponding to the paging message comprises: determining, by the UE, the paging type corresponding to the paging message in accordance with whether the first predetermined parameter is carried in the paging message.

7. A paging method, comprising:
determining, by a base station, a paging type of a paging for a UE when it is necessary for the base station to initiate the paging for the UE, the paging type comprising an access network paging initiated by an access network or a core network paging initiated by a core network (41); and
transmitting, by the base station, a paging message for determining the paging type to the UE (42),
**characterized in that** indication information of the paging type is carried in the paging message, wherein the indication information is of a value of one bit, the indication information indicates that the paging type is the access network paging when the value is 0, and the indication information indicates that the paging type is the core network paging when the value is 1; or
a predetermined parameter expressed in a predetermined expression mode is carried in the paging message, and different expression modes of the predetermined parameter correspond to different paging types; or
a first predetermined parameter is carried or not carried in the paging message, wherein it is determined whether the first predetermined parameter is carried in the paging message in accordance with the paging type.

8. A UE, comprising:
a reception unit (51) configured to receive a paging message for determining a paging type when the UE is in an inactive state, wherein the paging message is transmitted from a base station, and the paging type comprises an access network paging initiated by an access network or a core network paging initiated by a core network;
a determination unit (52) configured to determine the paging type corresponding to the paging message; and
a first response unit (53) configured to, when the paging type corresponding to the paging message is the core network paging, update each of states of an NAS and an RRC layer for the UE into an idle state, and respond to the paging message,
**characterized in that** indication information of the paging type is carried in the paging message, wherein the indication information is of a value of one bit, the indication information indicates that the paging type is the access network paging when the value is 0, and the indication information indicates that the paging type is the core network paging when the value is 1; or
a predetermined parameter expressed in a predetermined expression mode is carried in the paging message, and different expression modes of the predetermined parameter correspond to different paging types; or
a first predetermined parameter is carried or not carried in the paging message, wherein it is determined whether the first predetermined parameter is carried in the paging message in accordance with the paging type.

9. The UE according to claim 8, wherein the first response unit (53) comprises:
a first processing unit located at the RRC layer and configured to update a state of the RRC layer for the UE into the idle state, notify the NAS for the UE to release a connection for the UE, and deliver paging content in the paging message to the NAS; and
a second processing unit located at the NAS and configured to update the state of the NAS into the idle state in accordance with a notification from the first response unit (53), receive the paging content delivered from the first processing unit, and respond to the paging content.

10. The UE according to claim 8, wherein the first response unit (53) comprises:
a third processing unit located at the RRC layer and configured to deliver paging content in the paging message to the NAS, and update the state of the RRC layer into the idle state; and
a fourth processing unit located at the NAS and configured to, upon the receipt of the paging content delivered from the third processing unit, update the state of the NAS into the idle state, and respond to the paging content.

11. The UE according to claim 8, further comprising:
a second response unit configured to, when the paging type is the access network paging, directly respond to the paging message, and initiate a connection recovery process, a connection establishment process or a connection reestablishment process.

12. The UE according to claim 8, wherein
the indication information of the paging type is carried in the paging message; and
the determination unit (52) is further configured to determine the paging type corresponding to the paging message in accordance with the indication information.

13. The UE according to claim 8, wherein
the predetermined parameter expressed in the predetermined expression mode is carried in the paging message, and the different expression modes of the predetermined parameter correspond to different paging types; and the determination unit (52) is further configured to determine the paging type corresponding to the expression mode of the predetermined parameter in the paging message, to acquire the paging type corresponding to the paging message; or
the first predetermined parameter is carried or not carried in the paging message, wherein it is determined whether the first predetermined parameter is carried in the paging message in accordance with the paging type; and the determination unit (52) is further configured to determine the paging type corresponding to the paging message in accordance with whether the first predetermined parameter is carried in the paging message.

14. Abase station, comprising:
a determination unit (71) configured to determine a paging type of a paging for a UE when it is necessary for the base station to initiate the paging for the UE, wherein the paging type comprises an access network paging initiated by an access network or a core network paging initiated by a core network; and
a transmission unit (72) configured to transmit a paging message for determining the paging type to the UE,
**characterized in that** indication information of the paging type is carried in the paging message, wherein the indication information is of a value of one bit, the indication information indicates that the paging type is the access network paging when the value is 0, and the indication information indicates that the paging type is the core network paging when the value is 1; or
a predetermined parameter expressed in a predetermined expression mode is carried in the paging message, and different expression modes of the predetermined parameter correspond to different paging types; or
a first predetermined parameter is carried or not carried in the paging message, wherein it is determined whether the first predetermined parameter is carried in the paging message in accordance with the paging type.

## Patentansprüche

1. Paging-Verfahren, das umfasst:
Empfangen, durch ein Benutzerendgerät, UE, in einem inaktiven Zustand, einer Paging-Nachricht zum Bestimmen eines Paging-Typs, wobei die Paging-Nachricht von einer Basisstation gesendet wird und der Paging-Typ ein von einem Zugangsnetzwerk initiiertes Zugangsnetzwerk-Paging oder ein von einem Kernnetzwerk (31) initiiertes Kernnetzwerk-Paging umfasst;
Bestimmen, durch das UE, des der Paging-Nachricht (32) entsprechenden Paging-Typs; und
wenn der der Paging-Nachricht entsprechende Paging-Typ das Kernnetzwerk-Paging ist, Aktualisieren, durch das UE, jedes der Zustände einer Non-Access Stratum, NAS, und einer Radio Resource Control-, RRC, Schicht für das UE in einen Ruhezustand und Antworten, durch das UE, auf die Paging-Nachricht (33),
**dadurch gekennzeichnet, dass** Indikatorinformation des Paging-Typs in der Paging-Nachricht transportiert wird, wobei die Indikatorinformation einen Wert von einem Bit hat, die Indikatorinformation anzeigt, dass der Paging-Typ das Zugangsnetzwerk-Paging ist, wenn der Wert 0 ist, und die Indikatorinformation anzeigt, dass der Paging-Typ das Kernnetzwerk-Paging ist, wenn der Wert 1 ist; oder
ein in einem vorbestimmten Ausdrucksmodus ausgedrückter vorbestimmter Parameter in der Paging-Nachricht transportiert wird und unterschiedliche Ausdrucksmodi des vorbestimmten Parameters unterschiedlichen Paging-Typen entsprechen; oder
ein erster vorbestimmter Parameter in der Paging-Nachricht transportiert oder nicht transportiert wird, wobei gemäß dem Paging-Typ bestimmt wird, ob der erste vorbestimmte Parameter in der Paging-Nachricht transportiert wird.

2. Paging-Verfahren nach Anspruch 1, bei dem das Aktualisieren, durch das UE, jedes der Zustände der NAS und der RRC-Schicht für das UE in den Ruhezustand und das Antworten, durch das UE, auf die Paging-Nachricht umfasst:
Erlauben, dass die RRC-Schicht für das UE einen Zustand der RRC-Schicht in den Ruhezustand aktualisiert und die NAS zwecks Freigabe einer Verbindung für das UE benachrichtigt, und Erlauben, dass die NAS für das UE den Zustand der NAS in den Ruhezustand aktualisiert; und
Erlauben, dass die RRC-Schicht für das UE Paging-Inhalt für die Paging-Nachricht zu der NAS liefert, und Erlauben, dass die NAS den Paging-Inhalt empfängt und auf den Paging-Inhalt antwortet.

3. Paging-Verfahren nach Anspruch 1, bei dem das Aktualisieren, durch das UE, jedes der Zustände der NAS und der RRC-Schicht für das UE in den Ruhezustand und das Antworten, durch das UE, auf die Paging-Nachricht umfasst:
Erlauben, dass die RRC-Schicht für das UE Paging-Inhalt in der Paging-Nachricht zu der NAS liefert und den Zustand der RRC-Schicht in den Ruhezustand aktualisiert; und
Erlauben, dass die NAS für das UE bei Empfang des Paging-Inhalts den Zustand der NAS in den Ruhezustand aktualisiert und auf den Paging-Inhalt antwortet.

4. Paging-Verfahren nach Anspruch 1, das ferner umfasst:
wenn der der Paging-Nachricht entsprechende Paging-Typ das Zugangsnetzwerk-Paging ist, direktes Antworten, durch das UE, auf die Paging-Nachricht und Initiieren, durch das UE, eines Verbindungswiedergewinnungsprozesses, eines Verbindungsherstellprozesses oder eines Verbindungswiederherstellprozesses.

5. Paging-Verfahren nach Anspruch 1, bei dem
die Indikatorinformationn des Paging-Typs in der Paging-Nachricht transportiert wird; und
das Bestimmen, durch das UE, des der Paging-Nachricht entsprechenden Paging-Typs umfasst:
Bestimmen, durch das UE, des der Paging-Nachricht entsprechenden Paging-Typs gemäß der Indikatorinformation.

6. Paging-Verfahren nach Anspruch 1, bei dem
der in dem vorbestimmten Ausdrucksmodus ausgedrückte vorbestimmte Parameter in der Paging-Nachricht transportiert wird und die unterschiedlichen Ausdrucksmodi des vorbestimmten Parameters den unterschiedlichen Paging-Typen entsprechen; und das Bestimmen, durch das UE, des der Paging-Nachricht entsprechenden Paging-Typs umfasst: Bestimmen, durch das UE, des dem Ausdrucksmodus des vorbestimmten Parameters in der Paging-Nachricht entsprechenden Paging-Typs zum Erfassen des der Paging-Nachricht entsprechenden Paging-Typs; oder
der erste vorbestimmte Parameter in der Paging-Mitteilung transportiert oder nicht transportiert wird und gemäß dem Paging-Typ bestimmt wird, ob der erste vorbestimmte Parameter in der Paging-Nachrichtung transportiert wird; und das Bestimmen, durch das UE, des der Paging-Nachricht entsprechenden Paging-Typs umfasst: Bestimmen, durch das UE, des der Paging-Nachricht entsprechenden Paging-Typs anhand dessen, ob der erste vorbestimmte Parameter in der Paging-Nachricht transportiert wird.

7. Paging-Verfahren, das umfasst:
Bestimmen, durch eine Basisstation, eines Paging-Typs eines Pagings für ein UE, wenn es erforderlich ist, dass die Basisstation das Paging für das UE initiiert, wobei der Paging-Typ ein von einem Zugangsnetzwerk initiiertes Zugangsnetzwerk-Paging oder ein von einem Kernnetzwerk (41) initiiertes Kernnetzwerk-Paging umfasst; und
Senden, durch die Basisstation, einer Paging-Nachricht zum Bestimmen des Paging-Typs zu dem UE (42),
**dadurch gekennzeichnet, dass** Indikatorinformation des Paging-Typs in der Paging-Nachricht transportiert wird, wobei die Indikatorinformation einen Wert von einem Bit hat, die Indikatorinformation anzeigt, dass der Paging-Typ das Zugangsnetzwerk-Paging ist, wenn der Wert 0 ist, und die Indikatorinformation anzeigt, dass der Paging-Typ das Kernnetzwerk-Paging ist, wenn der Wert 1 ist; oder
ein in einem vorbestimmten Ausdrucksmodus ausgedrückter vorbestimmter Parameter in der Paging-Nachricht transportiert wird und unterschiedliche Ausdrucksmodi des vorbestimmten Parameters unterschiedlichen Paging-Typen entsprechen; oder
ein erster vorbestimmter Parameter in der Paging-Nachricht transportiert oder nicht transportiert wird, wobei gemäß dem Paging-Typ bestimmt wird, ob der erste vorbestimmte Parameter in der Paging-Nachricht transportiert wird.

8. UE, das aufweist:
eine Empfangseinheit (51), die derart ausgebildet ist, dass sie eine Paging-Nachricht zum Bestimmen eines Paging-Typs empfängt, wenn das UE in einem inaktiven Zustand ist, wobei die Paging-Nachricht von einer Basisstation gesendet wird und der Paging-Typ ein von einem Zugangsnetzwerk initiiertes Zugangsnetzwerk-Paging oder ein von einem Kernnetzwerk (31) initiiertes Kernnetzwerk-Paging, umfasst;
eine Bestimmungseinheit (52), die derart ausgebildet ist, dass sie den der der Paging-Nachricht entsprechenden Paging-Typ bestimmt; und
eine erste Antworteinheit (53), die derart ausgebildet ist, dass sie dann, wenn der der Paging-Nachricht entsprechende Paging-Typ das Kernnetzwerk-Paging ist, jeden der Zustände einer NAS und einer RRC-Schicht für das UE in einen Ruhezustand aktualisiert und auf die Paging-Nachricht antwortet,
**dadurch gekennzeichnet, dass** Indikatorinformation des Paging-Typs in der Paging-Nachricht transportiert wird, wobei die Indikatorinformation einen Wert von einem Bit hat, die Indikatorinformation anzeigt, dass der Paging-Typ das Zugangsnetzwerk-Paging ist, wenn der Wert 0 ist, und die Anzeigeinformation anzeigt, dass der Paging-Typ das Kernnetzwerk-Paging ist, wenn der Wert 1 ist; oder
ein in einem vorbestimmten Ausdrucksmodus ausgedrückter vorbestimmter Parameter in der Paging-Nachricht transportiert wird und unterschiedliche Ausdrucksmodi des vorbestimmten Parameters unterschiedlichen Paging-Typen entsprechen; oder
ein erster vorbestimmter Parameter in der Paging-Nachricht transportiert oder nicht transportiert wird, wobei gemäß dem Paging-Typ bestimmt wird, ob der erste vorbestimmte Parameter in der Paging-Nachricht transportiert wird.

9. UE nach Anspruch 8, bei dem die erste Antworteinheit (53) aufweist:
eine erste Verarbeitungseinheit, die sich an der RRC-Schicht befindet und derart ausgebildet ist, dass sie einen Zustand der RRC-Schicht für das UE in den Ruhezustand aktualisiert, die NAS für das UE zwecks Freigabe einer Verbindung für das UE benachrichtigt und Paging-Inhalt in der Paging-Nachricht zu der NAS liefert; und
eine zweite Verarbeitungseinheit, die sich an der NAS befindet und derart ausgebildet ist, dass sie gemäß einer Benachrichtigung aus der ersten Antworteinheit (53) den Zustand der NAS in den Ruhezustand aktualisiert, den von der ersten Verarbeitungseinheit gelieferten Paging-Inhalt empfängt und auf den Paging-Inhalt antwortet.

10. UE nach Anspruch 8, bei dem die erste Antworteinheit (53) aufweist:
eine dritte Verarbeitungseinheit, die sich an der RRC-Schicht befindet und derart ausgebildet ist, dass sie Paging-Inhalt in der Paging-Mitteilung zu der NAS liefert und den Zustand der RRC-Schicht in den Ruhezustand aktualisiert; und
eine vierte Verarbeitungseinheit, die sich an der NAS befindet und derart ausgebildet ist, dass sie bei Empfang des aus der dritten Verarbeitungseinheit gelieferten Paging-Inhalts den Zustand der NAS in den Ruhezustand aktualisiert und auf den Paging-Inhalt antwortet.

11. UE nach Anspruch 8, das ferner aufweist:
eine zweite Antworteinheit, die derart ausgebildet ist, dass sie dann, wenn der Paging-Typ das Zugangsnetzwerk-Paging ist, direkt auf die Paging-Nachricht antwortet und einen Verbindungswiedergewinnungsprozess, einen Verbindungsherstellprozess oder einen Verbindungswiederherstellprozess initiiert.

12. UE nach Anspruch 8, bei dem
die Indikatorinformation des Paging-Typs in der Paging-Nachricht transportiert wird; und
die Bestimmungseinheit (52) ferner derart ausgebildet ist, dass sie gemäß den Indikatorinformation den der Paging-Mitteilung entsprechenden Paging-Typ bestimmt.

13. UE nach Anspruch 8, bei dem
der in dem vorbestimmten Ausdruckmodus ausgedrückte vorbestimmte Parameter in der Paging-Nachricht transportiert wird und die unterschiedlichen Ausdrucksmodi des vorbestimmten Parameters unterschiedlichen Paging-Modi entsprechen; und die Bestimmungseinheit (52) ferner derart ausgebildet ist, dass sie den dem Ausdrucksmodus des vorbestimmten Parameters in der Paging-Nachricht entsprechenden Paging-Typ bestimmt, um den der Paging-Nachricht entsprechenden Paging-Typ zu erfassen; oder
der erste vorbestimmte Parameter in der Paging-Nachricht transportiert oder nicht transportiert wird, wobei gemäß dem Paging-Typ bestimmt wird, ob der erste vorbestimmte Parameter in der Paging-Nachricht transportiert wird; und die Bestimmungseinheit (52) ferner derart ausgebildet ist, dass sie den der Paging-Nachricht entsprechenden Paging-Typ anhand dessen bestimmt, ob der erste vorbestimmte Parameter in der Paging-Nachricht transportiert wird.

14. Basisstation, die aufweist:
eine Bestimmungseinheit (71), die derart ausgebildet ist, dass sie einen Paging-Typ eines Pagings für ein UE bestimmt, wenn es erforderlich ist, dass die Basisstation das Paging für das UE initiiert, wobei der Paging-Typ ein von einem Zugangsnetzwerk initiiertes Zugangsnetzwerk-Paging oder ein von einem Kernnetzwerk initiiertes Kernnetzwerk-Paging umfasst; und
eine Sendeeinheit (72), die derart ausgebildet ist, dass sie eine Paging-Nachricht zum Bestimmen des Paging-Typs zu dem UE sendet,
**dadurch gekennzeichnet, dass** Indikatorinformation des Paging-Typs in der Paging-Nachricht transportiert wird, wobei die Indikatorinformationen einen Wert von einem Bit hat, die Anzeigeinformation anzeigt, dass der Paging-Typ das Zugangsnetzwerk-Paging ist, wenn der Wert 0 ist, und die Anzeigeinformation anzeigt, dass der Paging-Typ das Kernnetzwerk-Paging ist, wenn der Wert 1 ist; oder
ein in einem vorbestimmten Ausdrucksmodus ausgedrückter vorbestimmter Parameter in der Paging-Nachricht transportiert wird und unterschiedliche Ausdrucksmodi des vorbestimmten Parameters unterschiedlichen Paging-Typen entsprechen; oder
ein erster vorbestimmter Parameter in der Paging-Nachricht transportiert oder nicht transportiert wird, wobei gemäß dem Paging-Typ bestimmt wird, ob der erste vorbestimmte Parameter in der Paging-Nachricht transportiert wird.

## Revendications

1. Procédé de radiomessagerie, comprenant le fait de:
recevoir, par un Equipement d'Utilisateur, UE, dans un état inactif, un message de radiomessagerie pour déterminer un type de radiomessagerie, le message de radiomessagerie étant transmis à partir d'une station de base, et le type de radiomessagerie comprenant une radiomessagerie de réseau d'accès initiée par un réseau d'accès ou un message de radiomessagerie de réseau central initié par un réseau central (31);
déterminer, par l'UE, le type de radiomessagerie correspondant au message de radiomessagerie (32); et
lorsque le type de radiomessagerie correspondant au message de radiomessagerie est la radiomessagerie de réseau central, mettre à jour, par l'UE, chacun des états d'une Couche de Non-Accès, NAS, et d'une couche de Contrôle de Ressources Radio, RRC, pour l'UE dans un état inactif, et réagir, par l'UE, au message de radiomessagerie (33),
**caractérisé par le fait que** les informations d'indication du type de radiomessagerie sont portées dans le message de radiomessagerie, où les informations d'indication ont une valeur d'un bit, les informations d'indication indiquent que le type de radiomessagerie est la radiomessagerie de réseau d'accès lorsque la valeur est 0, et les informations d'indication indiquent que le type de radiomessagerie est la radiomessagerie de réseau central lorsque la valeur est 1; ou
un paramètre prédéterminé exprimé dans un mode d'expression prédéterminé est porté dans le message de radiomessagerie, et différents modes d'expression du paramètre prédéterminé correspondent à différents types de radiomessagerie; ou
un premier paramètre prédéterminé est porté ou n'est pas porté dans le message de radiomessagerie, où il est déterminé si le premier paramètre prédéterminé est porté dans le message de radiomessagerie selon le type de radiomessagerie.

2. Procédé de radiomessagerie selon la revendication 1, dans lequel la mise à jour par l'UE de chacun des états de la NAS et de la couche RRC pour l'UE à l'état inactif et en réaction par l'UE au message de radiomessagerie comprend le fait de:
activer la couche RRC pour que l'UE mette à jour un état de la couche RRC à l'état inactif et notifier à la NAS de libérer une connexion pour l'UE, et activer la NAS pour que l'UE mette à jour l'état de la NAS à l'état inactif; et
activer la couche RRC pour que l'UE délivre le contenu de radiomessagerie dans le message de radiomessagerie à la NAS, et activer la NAS pour recevoir le contenu de radiomessagerie et pour réagir au contenu de radiomessagerie.

3. Procédé de radiomessagerie selon la revendication 1, dans lequel la mise à jour par l'UE de chacun des états de la NAS et de la couche RRC pour l'UE à l'état inactif et la réaction par l'UE au message de radiomessagerie comprennent le fait de:
activer la couche RRC pour que l'UE délivre le contenu de radiomessagerie dans le message de radiomessagerie à la NAS, et mettre à jour l'état de la couche RRC à l'état inactif; et
activer la NAS pour que l'UE mette à jour, à la réception du contenu de radiomessagerie, l'état de la NAS à l'état inactif et réagisse au contenu de radiomessagerie.

4. Procédé de radiomessagerie selon la revendication 1, comprenant par ailleurs le fait de:
lorsque le type de radiomessagerie correspondant au message de radiomessagerie est la radiomessagerie de réseau d'accès, réagir, par l'UE, directement au message de radiomessagerie, et initier, par l'UE, un processus de récupération de connexion, un processus d'établissement de connexion ou un processus de rétablissement de connexion.

5. Procédé de radiomessagerie selon la revendication 1, dans lequel
les informations d'indication du type de radiomessagerie sont portées dans le message de radiomessagerie; et
la détermination par l'UE du type de radiomessagerie correspondant au message de radiomessagerie comprend le fait de: déterminer, par l'UE, le type de radiomessagerie correspondant au message de radiomessagerie selon informations d'indication.

6. Procédé de radiomessagerie selon la revendication 1, dans lequel
le paramètre prédéterminé exprimé dans le mode d'expression prédéterminé est porté dans le message de radiomessagerie, et les différents modes d'expression du paramètre prédéterminé correspondent aux différents types de radiomessagerie; et la détermination par l'UE du type de radiomessagerie correspondant au message de radiomessagerie comprend le fait de: déterminer, par l'UE, le type de radiomessagerie correspondant au mode d'expression du paramètre prédéterminé dans le message de radiomessagerie pour acquérir le type de radiomessagerie correspondant au message de radiomessagerie; ou
le premier paramètre prédéterminé est porté ou n'est pas porté dans le message de radiomessagerie, et il est déterminé si le premier paramètre prédéterminé est porté dans le message de radiomessagerie selon le type de radiomessagerie; et la détermination par l'UE du type de radiomessagerie correspondant au message de radiomessagerie comprend le fait de: déterminer, par l'UE, le type de radiomessagerie correspondant au message de radiomessagerie selon le fait de si le premier paramètre prédéterminé est porté dans le message de radiomessagerie.

7. Procédé de radiomessagerie, comprenant le fait de:
déterminer, par une station de base, un type de radiomessagerie d'une radiomessagerie pour un UE lorsqu'il est nécessaire que la station de base initie la radiomessagerie pour l'UE, le type de radiomessagerie comprenant une radiomessagerie de réseau d'accès initiée par un réseau d'accès ou une radiomessagerie de réseau central initiée par un réseau central (41); et
transmettre, par la station de base, un message de radiomessagerie pour déterminer le type de radiomessagerie à l'UE (42),
**caractérisé par le fait que** les informations d'indication du type de radiomessagerie sont portées dans le message de radiomessagerie, où les informations d'indication ont une valeur d'un bit, les informations d'indication indiquent que le type de radiomessagerie est la radiomessagerie de réseau d'accès lorsque la valeur est 0, et les informations d'indication indiquent que le type de radiomessagerie est la radiomessagerie de réseau central lorsque la valeur est 1; ou
un paramètre prédéterminé exprimé dans un mode d'expression prédéterminé est porté dans le message de radiomessagerie, et différents modes d'expression du paramètre prédéterminé correspondent à différents types de radiomessagerie; ou
un premier paramètre prédéterminé est porté ou n'est pas porté dans le message de radiomessagerie, où il est déterminé si le premier paramètre prédéterminé est porté dans le message de radiomessagerie selon le type de radiomessagerie.

8. UE, comprenant:
une unité de réception (51) configurée pour recevoir un message de radiomessagerie pour déterminer un type de radiomessagerie lorsque l'UE se trouve dans un état inactif, où le message de radiomessagerie est transmis à partir d'une station de base, et le type de radiomessagerie comprend une radiomessagerie de réseau d'accès initiée par un réseau d'accès ou une radiomessagerie de réseau central initiée par un réseau central;
une unité de détermination (52) configurée pour déterminer le type de radiomessagerie correspondant au message de radiomessagerie; et
une première unité de réaction (53) configurée pour mettre à jour, lorsque le type de radiomessagerie correspondant au message de radiomessagerie est la radiomessagerie de réseau central, chacun des états d'une NAS et d'une couche RRC pour l'UE dans un état inactif, et réagir au message de radiomessagerie,
**caractérisé par le fait que** les informations d'indication du type de radiomessagerie sont portées dans le message de radiomessagerie, où les informations d'indication ont une valeur d'un bit, les informations d'indication indiquent que le type de radiomessagerie est la radiomessagerie de réseau d'accès lorsque la valeur est 0, et les informations d'indication indiquent que le type de radiomessagerie est la radiomessagerie de réseau central lorsque la valeur est 1; ou
un paramètre prédéterminé exprimé dans un mode d'expression prédéterminé est porté dans le message de radiomessagerie, et différents modes d'expression du paramètre prédéterminé correspondent à différents types de radiomessagerie; ou
un premier paramètre prédéterminé est porté ou n'est pas porté dans le message de radiomessagerie, où il est déterminé si le premier paramètre prédéterminé est porté dans le message de radiomessagerie selon le type de radiomessagerie.

9. UE selon la revendication 8, dans lequel la première unité de réaction (53) comprend:
une première unité de traitement située à la couche RRC et configurée pour mettre à jour un état de la couche RRC pour l'UE à l'état inactif, notifier à la NAS pour l'UE de libérer une connexion pour l'UE, et délivrer le contenu de radiomessagerie dans le message de radiomessagerie à la NAS; et
une deuxième unité de traitement située à la NAS et configurée pour mettre à jour l'état de la NAS à l'état inactif selon une notification de la première unité de réaction (53), recevoir le contenu de radiomessagerie délivré par la première unité de traitement, et réagir au contenu de radiomessagerie.

10. UE selon la revendication 8, dans lequel la première unité de réaction (53) comprend:
une troisième unité de traitement située à la couche RRC et configurée pour délivrer le contenu de radiomessagerie dans le message de radiomessagerie à la NAS, et mettre à jour l'état de la couche RRC à l'état inactif; et
une quatrième unité de traitement située à la NAS et configurée pour mettre à jour, lors de la réception du contenu de radiomessagerie délivré par la troisième unité de traitement, l'état de la NAS à l'état inactif, et réagir au contenu de radiomessagerie.

11. UE selon la revendication 8, comprenant par ailleurs:
une deuxième unité de réaction configurée pour réagir, lorsque le type de radiomessagerie est la radiomessagerie de réseau d'accès, directement au message de radiomessagerie et initier un processus de récupération de connexion, un processus d'établissement de connexion ou un processus de rétablissement de connexion.

12. UE selon la revendication 8, dans lequel
les informations d'indication du type de radiomessagerie sont portées dans le message de radiomessagerie; et
l'unité de détermination (52) est par ailleurs configurée pour déterminer le type de radiomessagerie correspondant au message de radiomessagerie selon les informations d'indication.

13. UE selon la revendication 8, dans lequel
le paramètre prédéterminé exprimé dans le mode d'expression prédéterminé est porté dans le message de radiomessagerie, et les différents modes d'expression du paramètre prédéterminé correspondent à différents types de radiomessagerie; et l'unité de détermination (52) est par ailleurs configurée pour déterminer le type de radiomessagerie correspondant au mode d'expression du paramètre prédéterminé dans le message de radiomessagerie, pour acquérir le type de radiomessagerie correspondant au message de radiomessagerie; ou
le premier paramètre prédéterminé est porté ou n'est pas porté dans le message de radiomessagerie, où il est déterminé si le premier paramètre prédéterminé est porté dans le message de radiomessagerie selon le type de radiomessagerie; et l'unité de détermination (52) est par ailleurs configurée pour déterminer le type de radiomessagerie correspondant au message de radiomessagerie selon le fait de si le premier paramètre prédéterminé est porté dans le message de radiomessagerie.

14. Station de base, comprenant:
une unité de détermination (71) configurée pour déterminer un type de radiomessagerie d'une radiomessagerie pour un UE lorsqu'il est nécessaire que la station de base initie la radiomessagerie pour l'UE, où le type de radiomessagerie comprend une radiomessagerie de réseau d'accès initiée par un réseau d'accès ou une radiomessagerie de réseau central initiée par un réseau central; et
une unité de transmission (72) configurée pour transmettre un message de radiomessagerie pour déterminer le type de radiomessagerie à l'UE,
**caractérisée par le fait que** les informations d'indication du type de radiomessagerie sont portées dans le message de radiomessagerie, où les informations d'indication ont une valeur d'un bit, les informations d'indication indiquent que le type de radiomessagerie est la radiomessagerie de réseau d'accès lorsque la valeur est 0, et les informations d'indication indiquent que le type de radiomessagerie est la radiomessagerie de réseau central lorsque la valeur est 1; ou
un paramètre prédéterminé exprimé dans un mode d'expression prédéterminé est porté dans le message de radiomessagerie, et différents modes d'expression du paramètre prédéterminé correspondent à différents types de radiomessagerie; ou
un premier paramètre prédéterminé est porté ou n'est pas porté dans le message de radiomessagerie, où il est déterminé si le premier paramètre prédéterminé est porté dans le message de radiomessagerie selon le type de radiomessagerie.
